(19) **Europäisches Patentamt / European Patent Office / Office européen des brevets**

(11) **EP 2 562 570 B1**

(12) **FASCICULE DE BREVET EUROPEEN**

(45) Date de publication et mention de la délivrance du brevet:
**26.02.2014 Bulletin 2014/09**

(51) Int Cl.:
*G02B 6/00* *(2006.01)*    *F21V 8/00* *(2006.01)*

(21) Numéro de dépôt: **12185222.2**

(22) Date de dépôt: **24.11.2010**

(54) **Dispositif de collimation, d'uniformisation et d'extraction de lumière pour l'éclairage d'un dispositif d'affichage**

Vorrichtung zur Bündelung, Homogenisierung und Extraktion von Licht zum Beleuchten einer Anzeigevorrichtung

Device for light collimation, homogenisation and extraction for lighting a display device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2009 EP 09179641**

(43) Date de publication de la demande:
**27.02.2013 Bulletin 2013/09**

(62) Numéro(s) de document de la (des) demande(s) initiale(s) en application de l'article 76 CBE:
**10192445.4 / 2 341 375**

(73) Titulaire: **The Swatch Group Research and Development Ltd.**
**2074 Marin (CH)**

(72) Inventeurs:
• **Tortora, Pierpasquale**
  **2000 Neuchâtel (CH)**
• **Springer, Simon**
  **3007 Bern (CH)**

(74) Mandataire: **Giraud, Eric et al**
**ICB**
**Ingénieurs Conseils en Brevets SA**
**Faubourg de l'Hôpital 3**
**2001 Neuchâtel (CH)**

(56) Documents cités:
| | |
|---|---|
| WO-A2-2007/014371 | US-A1- 2003 147 232 |
| US-A1- 2006 139 580 | US-A1- 2006 227 302 |
| US-A1- 2006 274 621 | |

**Description**

La présente invention concerne un dispositif de collimation, d'uniformisation et d'extraction de lumière pour l'éclairage d'un dispositif d'affichage. Plus précisément, la présente invention concerne un tel dispositif qui permet de collimater la direction de propagation d'un faisceau lumineux afin de faciliter l'extraction de la lumière destinée à éclairer le dispositif d'affichage.

Un dispositif d'affichage réflectif tel qu'une cellule à cristal liquide réflective nécessite d'être éclairé par sa face avant, c'est-à-dire du côté où s'affichent les informations. A cet effet, on utilise un système d'éclairage communément appelé système d'éclairage front-light. Différents modes de réalisation de systèmes d'éclairage front-light sont connus dans l'état de la technique mais n'ont, jusqu'à présent, trouvé que peu d'applications sur le marché. Ceci est notamment dû au fait qu'il est difficile de réaliser un système d'éclairage du type front-light présentant une bonne efficacité d'éclairage sans que les structures impliquées ne gênent la lisibilité des informations affichées. D'autre part, les systèmes d'éclairage front-light actuellement connus ne présentent pas de rendements entre la puissance électrique consommée et la puissance optique restituée très satisfaisants et affichent des prix de revient qui les rendent difficilement compatibles avec les exigences de la fabrication industrielle.

Le système le plus souvent envisagé pour la réalisation d'un dispositif d'éclairage du type front-light reprend les principes de fonctionnement d'un dispositif de rétro-éclairage encore appelé dispositif d'éclairage de type back-light. Un tel dispositif de rétro-éclairage est schématiquement représenté à la figure 1 annexée à la présente demande de brevet. Désigné dans son ensemble par la référence numérique générale 1, le dispositif de rétro-éclairage comprend un guide de lumière 2 plan et transparent disposé en-dessous d'un dispositif d'affichage d'informations 4 destiné à être éclairé tel qu'une cellule à cristal liquide. Une source de lumière 6 injecte de la lumière dans le guide 2 par un côté de celui-ci. Le guide de lumière 2 est usiné de façon à y créer des extracteurs de lumière 8 qui permettent de dévier une partie de la lumière se propageant à l'intérieur du guide 2 vers le dispositif d'affichage 4. Les extracteurs de lumière 8 peuvent être des microprismes, des microlentilles, un réseau diffractif ou autre. Le montage est complété par un miroir 10 disposé en-dessous du guide de lumière 2. Bien entendu, le dispositif d'affichage d'informations 4 est de type transmissif.

L'application du système de rétro-éclairage à un dispositif d'affichage d'informations de type réflectif est illustrée aux figures 2A et 2B annexées à la présente demande de brevet. Dans ce cas, un guide de lumière 12 plan et transparent est disposé au-dessus d'un dispositif d'affichage d'informations 14 de type réflectif destiné à être éclairé tel qu'une cellule d'affichage à cristal liquide réflective. En vision diurne, la lumière du soleil traverse le guide de lumière 12 et est réfléchie par la cellule d'affichage 14 pour à nouveau traverser le guide de lumière 12 et atteindre l'observateur. En vision nocturne, la lumière produite par une source lumineuse 16 est injectée par un côté du guide de lumière 12 et est déviée par des extracteurs 18 (microprismes, microlentilles, réseau diffractif) en direction de la cellule d'affichage 14. La lumière est finalement réfléchie par la cellule d'affichage 14 à travers le guide de lumière 12 en direction de l'observateur.

Dans le cas d'un système d'injection de lumière dans un guide de lumière du genre décrit ci-dessus, le premier paramètre à optimiser est l'uniformité du flux lumineux dans toute la section du guide de lumière. Cette condition est en effet importante pour garantir une illumination uniforme du dispositif d'affichage sur toute sa surface. Comme représenté à la figure 3 annexée à la présente demande de brevet, l'uniformité de l'illumination du dispositif d'affichage 14 dans la direction de la longueur $\underline{L}$ du guide de lumière 12 est déterminée par la distribution des extracteurs 18 sur la surface du guide 12. Quant à l'uniformité de l'illumination du dispositif d'affichage 14 dans le sens de la largeur $\underline{l}$ du guide de lumière 12, elle dépend de la géométrie de la source lumineuse 16.

Ainsi, dans le cas de dispositifs sur lesquels ne pèsent pas de contraintes en termes de consommation électrique comme, par exemple, les écrans d'ordinateurs à cristaux liquides, la géométrie typique de la source lumineuse 16 est celle d'un tube fluorescent encore connu sous sa dénomination anglo-saxonne cold cathode fluorescent lamp ou CCFL dont la longueur correspond sensiblement à la largeur du dispositif d'affichage à cristal liquide. Néanmoins, bien que ces tubes fluorescents deviennent de plus en plus efficaces du point de vue du rendement, leur consommation électrique reste toujours incompatible avec une utilisation dans des dispositifs électroniques portables tels que par exemple des montres dont les réserves en énergie sont nécessairement limitées.

Par conséquent, dans ces objets portables tels que des montresbracelets, les sources lumineuses les plus couramment utilisées sont les diodes électroluminescentes encore appelées Light Emitting Diode ou LED. Les diodes électroluminescentes se caractérisent notamment par une grande luminance dans la mesure où toute leur énergie lumineuse est émise à partir d'une petite surface et présentent un rendement de conversion entre la puissance électrique consommée et la puissance optique fournie supérieur à celui de l'ensemble des sources lumineuses classiques. Toutefois, l'uniformisation de l'illumination d'un dispositif d'affichage au moyen d'une diode électroluminescente est rendue difficile en raison des dimensions réduites d'une telle diode.

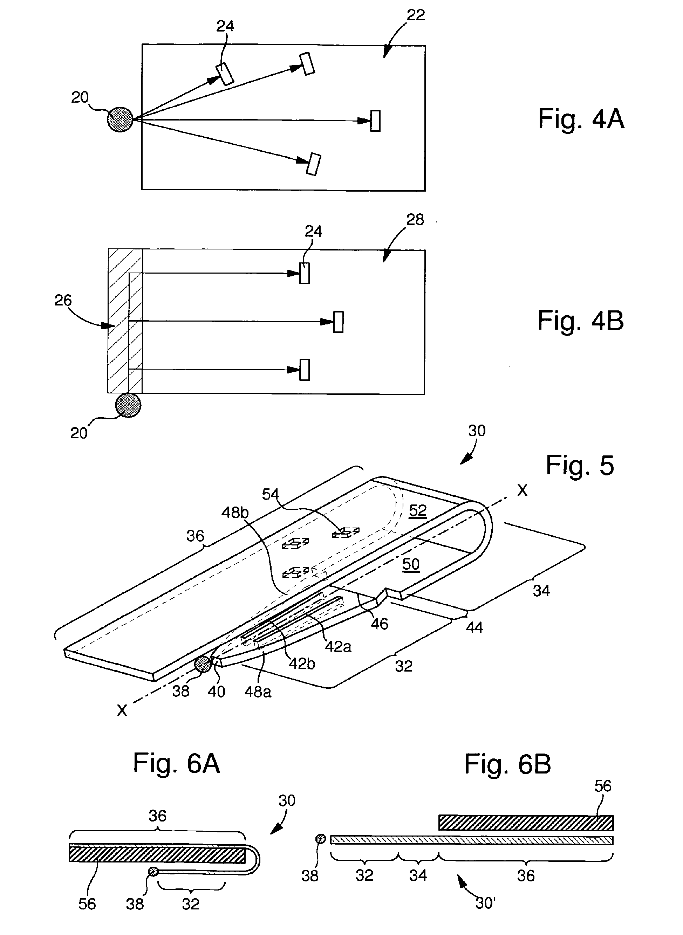

Les figures 4A et 4B annexées à la présente demande de brevet illustrent deux solutions couramment utilisées dans les dispositifs actuels pour injecter la lumière produite par une diode électroluminescente. Dans le premier cas (figures 4A), la diode électroluminescente 20 est placée directement en regard de l'entrée du guide de lumière 22. Une telle configuration permet d'obtenir un rendement élevé d'injection de la lumière produite par la diode électroluminescente 20. Néanmoins, en raison du lobe d'émission lumineuse typique d'une diode électroluminescente qui est du type Lambertien, la lumière à l'intérieur du guide 22 se propage selon un grand nombre de directions différentes. Or, l'efficacité d'extraction de la lumière des extracteurs 24 dépend essentiellement de leur orientation par rapport à la direction de propagation de la lumière. Ainsi, tant dans la phase de conception que dans la phase de fabrication du guide de lumière 22, il faut déterminer et contrôler l'orientation de chaque extracteur 24 par rapport à la position de la diode électroluminescente 20. Ceci s'avère être une tâche complexe dans le cas où les extracteurs de lumière 24 sont des microprismes, et quasi insoluble dans le cas où l'on voudrait faire appel à un réseau de diffraction. En effet, dans ce dernier cas, on devrait mettre au point un réseau diffractif présentant un profil de lignes courbé. Par ailleurs, avec ce système d'injection, l'éclairage latéral est peu uniforme étant donné qu'en raison du profil d'émission en forme de lobe de la diode électroluminescente, le rendement à l'injection de la lumière est plus élevé aux petits angles d'injection qu'aux grands angles d'injection.

Dans le second cas illustré à la figure 4B, la lumière est d'abord injectée dans une structure réflective/réfractive 26 qui a la faculté de réfléchir la lumière dans le guide 28 selon des directions de propagation sensiblement parallèles. Avec un tel agencement, la plupart des rayons lumineux se propagent parallèlement à l'axe du guide de lumière 28. Néanmoins, pour que l'injection de la lumière dans le guide 28 soit homogène, le déflecteur 26 doit être conçu de manière à pouvoir injecter une quantité de lumière constante sur toute la largeur du guide 28. Cet agencement est préférentiellement utilisé quand on recherche une bonne qualité d'éclairage du dispositif d'affichage (collimation) plutôt qu'un éclairage intense. En effet, le rendement du couplage à l'injection de la lumière dans le guide est en général inférieur d'un tiers à la puissance optique initiale de la source lumineuse.

Le document WO 2007/014371 décrit un système d'éclairage d'un dispositif d'affichage d'informations, ce système d'éclairage comprenant un guide de lumière présentant une zone d'injection et de collimation de la lumière parabolique composée quasi plane et bidimensionnelle sauf pour une portion d'adaptation à proximité de la lumière.

Le document US 2006/0139580 divulgue un élément optique réflectif de collecte de la lumière comprenant des parois latérales réflectives qui, conformément à un mode de réalisation, forment une zone d'injection et de collimation de la lumière tridimensionnelle. Cet élément optique de collecte de la lumière est suivi d'un tunnel intégrateur qui se présente sous la forme d'un bloc diélectrique dans lequel on concentre la lumière provenant des différents injecteurs. Ce tunnel intégrateur est effectivement nécessaire afin de transformer un ensemble discret de points lumineux en un seul faisceau homogène.

Le document US 2003/0147232 divulgue un système d'éclairage d'un dispositif d'affichage d'informations, ce système d'éclairage comprenant un guide de lumière dans lequel est injectée la lumière produite par une source de lumière, ce système d'éclairage comprenant une zone plane d'injection et de collimation de la lumière en forme de trapèze.

De ce qui précède, il ressort que, selon la solution retenue pour l'injection, dans un guide de lumière, de la lumière produite par une source lumineuse, on favorise soit le rendement à l'injection de la lumière dans le guide et donc la quantité de lumière qui, au final, va éclairer le dispositif d'affichage, soit l'uniformité de la lumière injectée dans le guide et donc la qualité de l'éclairage du dispositif d'affichage. A la connaissance de la Demanderesse, il n'existe pas de dispositif d'éclairage qui permette d'éclairer un dispositif d'affichage de manière à la fois lumineuse et uniforme.

Pour répondre à ce besoin dans l'état de la technique ainsi qu'à d'autres encore, la présente invention procure un système d'éclairage pour un dispositif d'affichage d'informations garantissant une excellente efficacité de couplage à l'injection de la lumière dans le guide de lumière selon l'invention de même qu'un niveau élevé de collimation du flux lumineux se propageant dans le guide de lumière.

A cet effet, la présente invention concerne un système d'éclairage d'un dispositif d'affichage d'informations selon la revendication 1 annexée à la présente demande de brevet.

Grâce à ces caractéristiques, la présente invention procure un système d'éclairage d'un dispositif d'affichage d'informations comprenant un guide de lumière présentant un rendement élevé d'injection de la lumière grâce à une efficacité de couplage optimale entre la source de lumière et le guide de même qu'un niveau élevé de collimation de la lumière qui se propage dans ce guide. A cet effet, le guide de lumière comprend tout d'abord une zone plane d'injection et de collimation de la lumière en forme de parabole, la source lumineuse étant placée en regard du sommet de la parabole. Le sommet de la parabole présentant une surface relativement faible et la source lumineuse étant placée directement en regard de cette surface, cela garantit un excellent rendement d'injection de la lumière dans le guide de lumière. Autrement dit, l'efficacité de couplage élevée entre la source lumineuse et le guide de lumière permet d'optimiser le rapport entre la puissance lumineuse produite par la source de lumière et la puissance électrique consommée par cette source. On dispose ainsi d'une puissance lumineuse plus élevée pour éclairer le dispositif d'affichage d'informations. D'autre part, la forme parabolique de la zone d'injection et de collimation du guide de lumière permet à la lumière de se propager à l'intérieur du guide selon des directions parallèles homogènes avec une distribution uniforme du flux lumineux dans la section du guide.

A la sortie de la zone d'injection et de collimation, la lumière se propage à l'intérieur de la zone plane d'extraction de la lumière dans laquelle le flux lumineux reçoit les derniers ajustements avant extraction qui mènent à une distribution uniforme de la lumière dans la section du guide et au parallélisme des rayons. Ainsi, le haut degré de collimation de la lumière simplifie considérablement le travail de conception et de fabrication du guide de lumière. En effet, grâce à la présente invention, il n'est pas nécessaire d'orienter les extracteurs de lumière en fonction de la position de la source de lumière, mais seulement par rapport à la direction générale de propagation de la lumière dans le guide, ce qui est beaucoup plus simple. Dans le cas où l'extraction de la lumière se fait au moyen de réseaux diffractifs, on peut choisir l'orientation des lignes du réseau de façon que l'extraction de la lumière soit optimale. En outre, l'orientation des lignes du réseau de diffraction reste inchangée sur toute la surface du guide.

Conformément à l'invention, la zone de collimation comprend deux fentes rectilignes disposées de part et d'autre de l'axe de symétrie de la parabole, les deux fentes s'écartant l'une de l'autre en direction de la zone d'extraction de la lumière.

On a en effet remarqué que la zone planaire d'injection et de collimation de forme parabolique tend quelque peu à concentrer la lumière sur les côtés du guide plutôt qu'au centre. Pour remédier à ce problème, on pratique dans la surface de la zone d'injection et de collimation deux fentes légèrement inclinées par rapport à l'axe de symétrie de la structure. Ces deux fentes permettent de faire converger plus de rayons au centre de la structure, tout en améliorant encore l'uniformité de la lumière dans la section du guide.

Pour améliorer encore davantage l'uniformité du flux lumineux dans toute la section du guide de lumière, on intercale entre la zone de collimation et la zone d'extraction de la lumière une zone intermédiaire de forme trapézoïdale, le trapèze étant un trapèze isocèle relié par sa grande base aux branches de la parabole délimitant la zone de collimation.

Dans le cas où l'on souhaite éclairer le dispositif d'affichage d'informations par le dessus, on prolonge la zone d'injection et de collimation par une zone intermédiaire comprenant une première portion plane de section rectangulaire suivie par une deuxième portion semi-cylindrique elle-même suivie par une troisième portion plane de section rectangulaire qui s'étend parallèlement à la première portion plane et qui sert de zone d'extraction de la lumière. Le dispositif d'affichage d'informations est disposé entre les première et troisième portions planes du guide de lumière de façon à recouvrir la source lumineuse et la zone d'injection et de collimation et à être lui-même recouvert par la troisième portion plane d'extraction de la lumière. Dans ce cas, le dispositif d'affichage, par exemple un dispositif d'affichage à cristal liquide, doit être réflectif. Le dispositif d'affichage permet donc de masquer totalement à la vue de l'observateur la source de lumière et une partie du guide de lumière. En particulier, l'utilisateur ne peut percevoir le halo de lumière produit par la source lumineuse, phénomène bien connu sous sa dénomination anglo-saxonne « hot spot », et ne peut donc pas localiser l'emplacement de cette source de lumière. De plus, le fait de recourber à 180° le guide de lumière permet d'obtenir un système d'éclairage compact qui n'excède pas les dimensions du dispositif d'affichage sans pour autant sacrifier l'action d'uniformisation et de collimation du flux lumineux par le guide de lumière. En effet, l'injection, la collimation et l'uniformisation du faisceau de lumière qui se propage dans le guide de lumière selon l'invention se font dans la partie du guide qui est recouverte par le dispositif d'affichage à éclairer et dont la longueur est suffisante à la lumière pour être collimatée et uniformisée. Il suffit donc ensuite d'introduire, dans le guide de lumière, une portion courbe qui permet d'acheminer la lumière vers le dessus du dispositif d'affichage à éclairer.

La source de lumière utilisée conjointement avec le guide de lumière selon l'invention est une source de lumière ponctuelle telle qu'une ampoule à incandescence ou préférentiellement une diode électroluminescente. Ainsi, grâce à la présente invention, il est possible, au moyen d'une source ponctuelle de lumière, d'éclairer de manière parfaitement uniforme une surface étendue correspondant à la section du guide de lumière.

D'autres caractéristiques et avantages de la présente invention ressortiront plus clairement de la description détaillée qui suit d'un mode de réalisation du système d'éclairage selon l'invention, cet exemple étant donné à titre purement illustratif et non limitatif seulement en liaison avec le dessin annexé sur lequel :

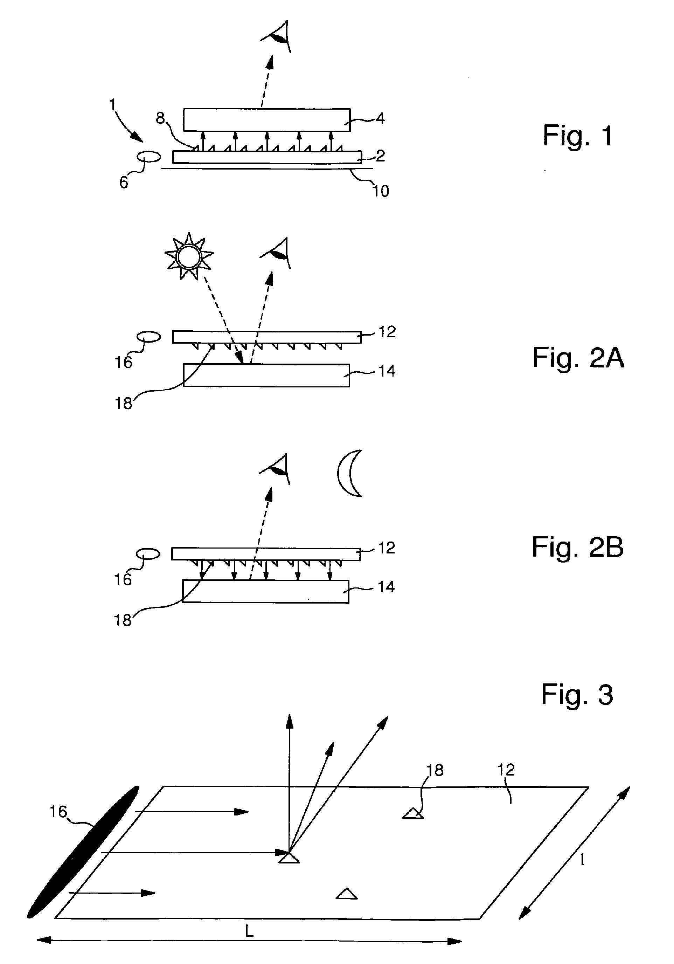

- la figure 1, déjà citée, est une représentation schématique d'un dispositif de rétro-éclairage d'un dispositif d'affichage d'informations de type transmissif tel qu'une cellule d'affichage à cristal liquide ;

- les figures 2A et 2B, déjà citées, sont des représentations schématiques en vision diurne et nocturne d'un dispositif d'affichage d'informations de type réflectif éclairé par l'avant tel qu'une cellule d'affichage à cristal liquide ;

- la figure 3, déjà citée, est une représentation schématique illustrant l'injection de lumière dans un guide de lumière planaire au moyen d'une source lumineuse étendue ;

- les figures 4A et 4B, déjà citées, sont des représentations schématiques illustrant l'injection de lumière dans un guide de lumière planaire au moyen d'une source lumineuse ponctuelle du type LED ;

- la figure 5 est une vue en perspective du guide de lumière conforme à la présente invention ;

- la figure 6A est une représentation schématique illustrant l'application du guide de lumière représenté à la figure 5 à l'éclairage par l'avant d'un dispositif d'affichage d'informations du type réflectif tel qu'une cellule à cristal liquide ;

- la figure 6B est une représentation schématique d'une variante de réalisation du guide de lumière selon l'invention utilisée pour l'éclairage par l'arrière d'un dispositif d'affichage d'informations de type transmissif tel qu'une cellule à cristal liquide ;

- la figure 6C est une représentation schématique d'un mode de réalisation simplifiée du guide de lumière selon l'invention ;

- la figure 7A montre les résultats de la mesure par un capteur photométrique de l'intensité lumineuse à la sortie du guide de lumière ;

- la figure 7B montre la distribution de l'intensité lumineuse le long d'un axe horizontal sur la surface du capteur photométrique ;

- la figure 8A montre les résultats concernant la distribution statistique des incidences angulaires des rayons lumineux à la surface du capteur photométrique ;

- la figure 8B correspond à une section de la vue de la figure 8A, et

- la figure 9 est une représentation graphique du profil de la parabole.

La présente invention procède de l'idée générale inventive qui consiste à procurer un guide de lumière pour l'éclairage d'un dispositif d'affichage d'informations qui présente à la fois un excellent rendement d'injection de la lumière et d'excellentes propriétés de collimation et d'uniformisation de la lumière dans toute sa section. Grâce à un tel guide de lumière, l'éclairage du dispositif d'affichage est à la fois lumineux et constant sur toute la surface du dispositif d'affichage. Pour atteindre un tel objectif, la présente invention divulgue un guide de lumière qui comprend au moins une zone plane d'injection et de collimation de la lumière de forme parabolique suivie d'une zone plane d'extraction de la lumière de section rectangulaire constante. La source lumineuse est placée en regard du sommet de la parabole de sorte que la surface d'injection de la lumière est réduite et donc le rendement d'injection élevé. De par sa forme parabolique, la zone d'injection du guide de lumière selon l'invention permet par ailleurs à la lumière injectée de se propager selon des directions parallèles à l'axe de la parabole. C'est donc un flux de lumière uniforme dont les rayons se propagent selon des directions parallèles qui pénètre dans la zone plane d'extraction de la lumière pour y être réfléchie en direction du dispositif d'affichage à éclairer. La direction de propagation de la lumière dans le guide étant bien définie, il est aisé de déterminer l'orientation des extracteurs de lumière (microprismes, microlentilles, réseau diffractif ou autre) pour une efficacité d'extraction de la lumière optimale.

La présente invention va être décrite en liaison avec un dispositif d'affichage d'informations du type cellule à cristal liquide qui peut être indifféremment réflective ou transmissive. Il va néanmoins de soi que cet exemple est donné à titre purement illustratif seulement et que le dispositif d'affichage d'informations peut être de toute nature comme un dispositif d'affichage électrophorétique ou cholestérique, un système micro-opto-électromécanique mieux connu sous sa dénomination anglo-saxonne Micro-Opto-Electromechanical System ou MOEMS, un dispositif d'affichage fonctionnant selon le principe de l' « electro wetting » ou bien encore un cadran de montre par exemple.

La figure 5 est une vue en perspective d'un guide de lumière selon l'invention. Désigné dans son ensemble par la référence numérique générale 30, ce guide de lumière comprend essentiellement une section plane 32 d'injection et de collimation de la lumière suivie par une section plane 34 de transmission de la lumière qui elle-même est suivie par une section plane 36 d'extraction de la lumière.

Comme cela est visible au dessin, la section d'injection et de collimation 32 est de forme parabolique, la source lumineuse 38 étant placée en regard du sommet 40 de la parabole. Cette configuration permet d'injecter la lumière dans le guide 30 avec une efficacité d'autant plus élevée que l'angle d'incidence des rayons de lumière qui pénètrent dans le guide est supérieur à l'angle de réflexion totale de ce guide. Par conséquent, la réflexion de la lumière est totale à l'interface entre le guide et l'air ambiant. Il n'est donc pas nécessaire de recourir à des artifices tels qu'une métallisation du pourtour du guide de lumière pour s'assurer que la lumière ne s'échappe pas du guide. Par ailleurs, la forme parabolique de la zone d'injection et de collimation a pour effet de collimater les faisceaux de lumière émis par la source lumineuse 38 selon des directions de propagation parallèles à l'axe de symétrie X-X de la parabole.

Comme on a remarqué que la section d'injection et de collimation 32 avait quelque peu tendance à concentrer la lumière davantage sur les bords du profil parabolique plutôt qu'au centre de la structure, on peut, à titre accessoire, pratiquer dans la section d'injection et de collimation 32 deux fentes rectangulaires 42a et 42b disposées de manière symétrique de part et d'autre de l'axe de symétrie X-X de la parabole. Ces deux fentes 42a et 42b s'écartent légèrement l'une de l'autre selon un angle préféré de 3° dans le sens de propagation de la lumière à l'intérieur du guide 30 et ont pour effet de diriger plus de rayons lumineux au centre du guide 30 tout en améliorant l'uniformité de la répartition de la lumière dans la section du guide 30.

La section d'injection et de collimation 32 de la lumière est prolongée par une section plane 34 de transmission de la lumière. A titre de variante, on peut prévoir entre la section d'injection et de collimation 32 et la section de transmission 34 une section 44 en forme de trapèze isocèle reliée par sa grande base 46 aux branches 48a et 48b de la section d'injection et de collimation 32 parabolique. Cette section trapézoïdale 44 permet de renforcer l'effet d'uniformisation de la section d'injection et de collimation 32.

La section plane 34 de transmission de la lumière comprend une première portion plane 50 de forme rectangulaire prolongée par une deuxième portion semi-cylindrique 52 qui est elle-même prolongée par la section d'extraction de la lumière 36 qui s'étend parallèlement à et à distance de la première portion plane 50. Dans la première portion plane 50 de la section de transmission de la lumière 34, le flux lumineux reçoit les dernières modifications qui mènent à une distribution uniforme de la lumière dans la section du guide 30 et au parallélisme des directions de propagation des faisceaux de lumière. Une fois que les propriétés d'uniformité et de parallélisme ont été optimisées, la lumière poursuit son chemin à travers la portion semi-cylindrique 52 de la section de transmission 34 qui courbe les rayons de 180° pour les injecter dans la section planaire 36 d'extraction de la lumière. La section d'extraction 36 de la lumière est de forme rectangulaire et est munie d'extracteurs optiques 54 pour extraire la lumière du guide 30. Ces extracteurs optiques 54 peuvent au choix être des microprismes, des microlentilles ou bien encore un réseau diffractif. Comme la lumière dans le guide 30 présente des propriétés d'uniformité et de parallélisme élevées, l'agencement des extracteurs optiques 54 est considérablement simplifié.

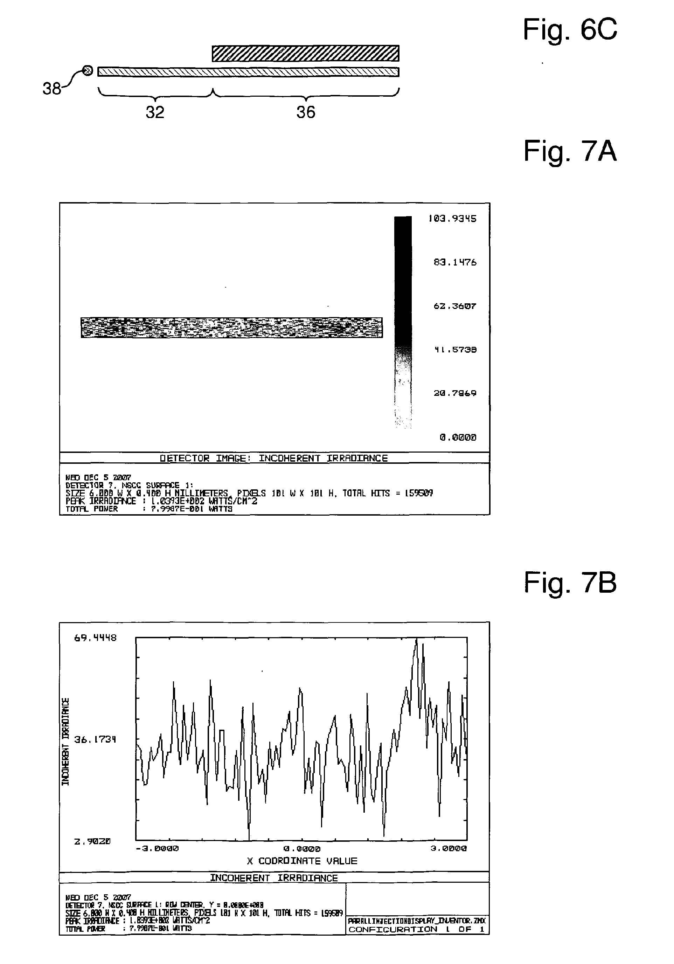

Les figures 6A et 6B illustrent schématiquement deux exemples d'utilisation d'un guide de lumière selon l'invention. A la figure 6A, le guide de lumière 30 décrit ci-dessus est utilisé pour éclairer par l'avant un dispositif d'affichage d'informations 56 de type réflectif tel qu'une cellule d'affichage à cristal liquide. A cet effet, la cellule d'affichage 56 est disposée entre la section d'injection et de collimation 32 et la section d'extraction de la lumière 36. Comme on peut le constater à l'examen du dessin, le système d'éclairage formé par le guide de lumière 30 et la source d'éclairage 38 est très compact et excède à peine les dimensions de la cellule à cristal liquide 56. De plus, la source d'éclairage 38 et une partie du guide de lumière 30 sont masqués au regard de l'observateur. A la figure 6B, on voit l'application du guide de lumière selon l'invention à l'éclairage d'un dispositif d'affichage d'informations de type transmissif 58 tel qu'une cellule d'affichage à cristal liquide. Conformément à ce mode de réalisation, le guide de lumière 30' est dépourvu de portion semi-cylindrique et se compose uniquement de la section d'injection et de collimation 32 suivie de la section de transmission 34 et de la section d'extraction de la lumière 36. Dans un mode de réalisation simplifié de l'invention, la section de transmission 34 peut être omise et on raccorde directement la section d'injection et de collimation 32 à la section d'extraction de la lumière 36 (voir figure 6C). On notera que la source de lumière 38 peut être tout type de source lumineuse ponctuelle tel qu'une lampe à incandescence ou une diode électroluminescente.

Les performances optiques du guide de lumière 30 décrit ci-dessus ont été analysées numériquement à l'aide du logiciel Zemax Ray tracing. Le matériau choisi dans les simulations pour la fabrication du guide de lumière 30 est le verre BK7. Toutefois, le comportement du guide de lumière 30 reste très similaire dans le cas où il est réalisé en un matériau plastique. Dans ce dernier cas, le guide de lumière selon l'invention peut être fabriqué très simplement par injection plastique. Le guide de lumière 30 ayant fait l'objet de la simulation présente une épaisseur uniforme de 0,4 mm et sa géométrie permet d'éclairer un dispositif d'affichage d'informations de type réflectif 56 dont les dimensions sont de 6x16 mm. Le rayon de courbure interne de la portion semi-cylindrique 52 est de 0,95 mm. La source de lumière 38 utilisée est une diode électroluminescente disponible dans les catalogues Kingbright et sa longueur d'onde est de 0,55 $\mu$m. Comme on cherche avant tout à évaluer les propriétés de la lumière dans la partie du guide 30 qui recouvre le dispositif d'affichage, autrement dit dans la section d'extraction de la lumière 36, on place le capteur de lumière à la sortie du guide 30, c'est-à-dire du côté opposé à la zone d'injection et de collimation 32. Les dimensions du capteur photométrique correspondent exactement à la section du guide de lumière 30.

La figure 7A montre les résultats de la mesure par le capteur photométrique de l'intensité lumineuse à la sortie du guide de lumière. On remarque que cette intensité est sensiblement uniforme dans toute la section du guide de lumière 30 et représente 80% de la puissance lumineuse initiale injectée par la diode électroluminescente 38 dans le guide 30.

Soit un repère orthogonal (x, y) s'étendant dans le plan du capteur, l'axe « x » s'étendant suivant la largeur du capteur et le point x =0, y = 0 correspondant au centre du capteur. La figure 7B montre la distribution de l'intensité le long de l'axe « x » avec y = 0. On remarque que le signal présente des fluctuations mais que sa valeur moyenne est sensiblement constante. Les fluctuations observées sont dues pour une part au bruit mais aussi au fait que la simulation numérique se fait sur un nombre fini seulement de rayons lumineux. Par conséquent, si l'on exécute une deuxième fois la simulation, il est tout à fait possible qu'un pixel du capteur qui affichait, lors de la simulation précédente, une valeur inférieure à la valeur moyenne, affiche, lors de la simulation suivante, une valeur supérieure à la valeur moyenne.

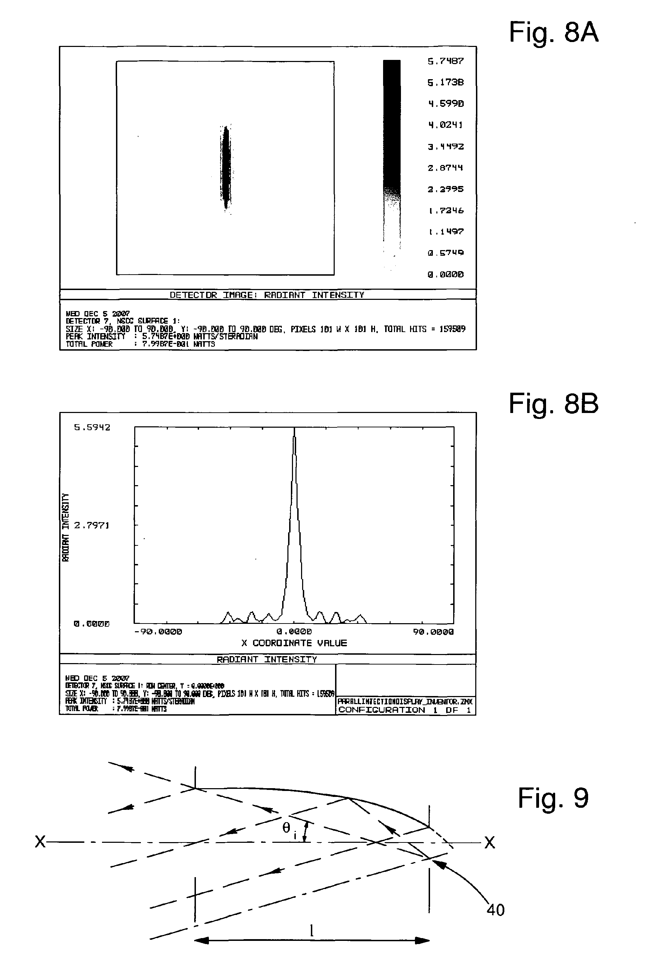

La figure 8A montre les résultats concernant la distribution statistique des incidences angulaires des rayons lumineux à la surface du capteur photométrique. Cette distribution est obtenue en mesurant l'angle que forme le vecteur associé au rayon lumineux lorsqu'il tombe sur la surface du capteur photométrique. Le point x = 0, y = 0 correspond à un rayon qui tombe perpendiculairement sur la surface du capteur. La direction « x » caractérise l'angle que forment les rayons lumineux se propageant à l'intérieur du guide 30 avec l'axe de symétrie du guide. Dans cette direction, on constate que la distribution angulaire est très proche de x = 0 ; la plupart des rayons se propagent donc parallèlement à l'axe du guide de lumière 32 avec un écart maximal de 8 à 9° et tombent donc sur la surface du capteur avec un angle proche de 90°. Dans la direction « y », on observe une large distribution statistique, ce qui n'est pas surprenant dans la mesure où, dans cette direction, les angles d'incidence correspondent aux angles de réflexion totale des rayons sur les surfaces internes du guide. On a donc un continuum de valeurs qui est cependant limité par l'angle d'acceptance du guide.

La figure 8B correspond à la section à y = 0 de la vue de la figure 8A. On remarque que dans la direction « x », l'angle d'incidence des rayons ne dépasse pas 10°.

La figure 9 est une représentation graphique du profil de la parabole qui est défini comme la section centrale d'un concentrateur parabolique composé mieux connu sous sa dénomination anglo-saxonne Compound Parabolic Concentrator ou CPC. Si $\theta_i$ est l'angle d'acceptance de la parabole et 2a' le diamètre d'entrée de la parabole, alors la longueur focale f de la parabole est :

$$f = a'(1 + \sin\theta_i)$$

la longueur L de la parabole est :

$$L = a'(1 + \sin\theta_i)\cos\theta_i / \sin^2\theta_i$$

et le diamètre de sortie a de la parabole est :

$$a = a'/\sin\theta_i$$

**Revendications**

1. Système d'éclairage d'un dispositif d'affichage d'informations (56), ce système d'éclairage comprenant un guide de lumière (30) dans lequel est injectée la lumière produite par une source lumineuse (38), le guide de lumière (30) comprenant une zone plane d'injection et de collimation de la lumière (32) en forme de parabole, cette parabole comprenant deux branches (48a, 48b) reliées entre elles par un sommet (40), la source de lumière (38) étant disposée en regard du sommet (40), les branches (48a, 48b) de la parabole qui délimitent le contour de la zone plane d'injection et de collimation (32) étant prolongées par une zone plane d'extraction de la lumière (36) se propageant à l'intérieur du guide (30), cette zone d'extraction (36) étant de section rectangulaire et étant pourvue d'extracteurs de lumière (54), la longueur focale f de la parabole étant :

$$f = a'(1 + \sin\theta_i)$$

la longueur L de la parabole étant :

$$L = a'(1 + \sin\theta_i)\cos\theta_i / \sin^2\theta_i$$

et
le diamètre de sortie a de la parabole étant :

$$a = a'/\sin\theta_i$$

si $\theta_i$ est l'angle d'acceptance de la parabole et si le sommet (40) qui relie entre elles les deux branches (48a, 48b) de la parabole a une largeur 2a' qui définit le diamètre d'entrée de la parabole, le système d'éclairage étant **caractérisé en ce que** la zone d'injection et de collimation (32) comprend deux fentes rectilignes (42a, 42b) disposées de part et d'autre de l'axe de symétrie (X-X) de la parabole, les deux fentes (42a, 42b) s'écartant l'une de l'autre en direction de la zone d'extraction de la lumière (36).

2. Système d'éclairage selon la revendication 1, **caractérisé en ce que** les fentes (42a, 42b) forment avec l'axe de symétrie (X-X) de la parabole un angle de 3°.

3. Système d'éclairage selon l'une quelconque des revendications 1 à 2, **caractérisé en ce qu'**une zone de transmission (34) comprenant au moins une première portion plane (50) de forme rectangulaire est intercalée entre la zone d'injection et de collimation (32) et la zone d'extraction (36).

4. Système d'éclairage selon la revendication 3, **caractérisé en ce que** la première portion plane (50) est prolongée par une deuxième portion semi-cylindrique (52) qui elle-même est prolongée par la zone d'extraction (36) qui s'étend parallèlement à la zone d'injection et de collimation (32).

5. Système d'éclairage selon la revendication 4, **caractérisé en ce que** le dispositif d'affichage d'informations est réflectif.

6. Système d'éclairage selon la revendication 5, **carac-**

**térisé en ce que** le dispositif d'affichage d'informations est une cellule à cristal liquide (56), un dispositif d'affichage électrophorétique ou cholestérique, un système micro-opto-électromécanique, un dispositif d'affichage fonctionnant selon le principe de l' « electro wetting » ou bien un cadran de montre.

7. Système d'éclairage selon l'une quelconque des revendications 1 à 6, **caractérisé en ce que** la source de lumière (38) est une source ponctuelle.

8. Système d'éclairage selon la revendication 7, **caractérisé en ce que** la source de lumière (38) est une diode électroluminescente.

**Patentansprüche**

1. Beleuchtungssystem einer Informationsanzeigevorrichtung (56), wobei das Beleuchtungssystem eine Lichtleiter (30) aufweist, in welchem das Licht, welches von einer Lichtquelle (38) erzeugt wird, eingekoppelt wird, wobei der Lichtleiter (30) eine ebene Lichtinjektions- und Kollimationszone (32) in Form einer Parabel aufweist, welche Parabel zwei Arme (48a, 48b) aufweist, die über einen Scheitel (40) miteinander verbunden sind, wobei die Lichtquelle (38) in Bezug auf den Scheitel (40) angeordnet ist, die Arme (48a, 48b) der Parabel, welche die Kontur der Lichtinjektions- und Kollimationszone (32) begrenzen, über eine ebene Licht-Extraktionszone (36) verlängert sind, wobei das Licht sich im Inneren des Leiters (30) ausbreitet, wobei die Extraktionszone (36) als rechteckiger Abschnitt ausgebildet und mit Auskoppler des Lichts (54) vorgesehen ist, wobei die fokale Länge f der Parabel:

$$f = a'(1 + \sin \theta_i)$$

ist die Länge L der Parabel:

$$L = a'(1 + \sin \theta_i)\cos \theta_i/\sin^2 \theta_i$$

ist, und der Durchmesser des Auslasses a der Parabel:

$$a = a'/\sin \theta_i$$

ist,
wenn $\theta_i$ der Akzeptanzwinkel der Parabel ist und wenn der Scheitel (40), der die beiden Arme (48a, 48b) der Parabel verbindet, eine Größe 2a' hat, die den Eintrittsdurchmesser der Parabel definiert, das Beleuchtungssystem **dadurch gekennzeichnet ist, dass** die Injektions- und Kollimationszone (32) zwei rechteckige Schlitze (42a, 42b) aufweist, die beidseitig der Symmetrieachse (X-X) der Parabel angeordnet sind, wobei sich die beiden Schlitze (42a, 42b) divergierend voneinander in Richtung der Licht-Extraktionszone (36) erstrecken.

2. Beleuchtungssystem nach Anspruch 1, **dadurch gekennzeichnet, dass** die Schlitze (42a, 42b) mit der Symmetrieachse (X-X) der Parabel einen Winkel von 3° bilden.

3. Beleuchtungssystem nach einem beliebigen der Ansprüche 1 bis 2, **dadurch gekennzeichnet, dass** eine Transmissionszone (34), welche zumindest einen ersten ebenen Abschnitt (50) in rechteckiger Form aufweist, zwischen der Injektions- und Kollimationszone (32) und der Extraktionszone (36) liegt.

4. Beleuchtungssystem nach Anspruch 3, **dadurch gekennzeichnet, dass** der erste ebene Abschnitt (50) von einem zweiten halbzylindrischen Abschnitt (52) verlängert ist, welcher selbst von der Extraktionszone (36) verlängert ist, die sich parallel zur Injektions- und Kollimationszone (32) erstreckt.

5. Beleuchtungssystem nach Anspruch 4, **dadurch gekennzeichnet, dass** die Informationsanzeigevorrichtung reflektiv ist.

6. Beleuchtungssystem nach Anspruch 5, **dadurch gekennzeichnet, dass** die Informationsanzeigevorrichtung eine Flüssigkristallzelle (56), eine elektrophoretische oder cholesterische Anzeigevorrichtung, ein mikro-optischeselektromecha-nisches System, eine nach dem Prinzip des "electro wetting" funktionierende Anzeigevorrichtung oder ein Ziffernblatt einer Uhr ist.

7. Beleuchtungssystem nach einem beliebigen der Ansprüche 1 bis 6, **dadurch gekennzeichnet, dass** die Lichtquelle (38) eine Punktquelle ist.

8. Beleuchtungssystem nach Anspruch 7, **dadurch gekennzeichnet, dass** die Lichtquelle (38) eine elektrolumineszierende Diode ist.

**Claims**

1. Lighting system for a data display device (56), said lighting system including a light guide (30) into which the light produced by a light source (38) is injected, said light guide (30) including a plane light injection and collimation zone (32) in the form of a parabola, said parabola including two branches (48a, 48b) connected to each other via an apex (40), the light source (38) being arranged opposite the apex (40), the branches (48a, 48b) of the parabola which delimit the contour of the plane injection and collimation zone (32) being extended by a plane extraction zone (36) for the light propagating inside the guide (30), said extraction zone (36) having a rectangular section and being provided with light extractors (54), the focal length f of the parabola being:

$$f = a' (1 + \sin\theta_i)$$

the length L of the parabola is:

$$L = a' (1 + \sin\theta_i) \cos\theta_i / \sin^2\theta_i$$

and
the parabola output diameter is:

$$a = a'/\sin\theta_i$$

if $\theta_i$ is the angle of acceptance of the parabola, and if the apex (40) which connects to each other the two branches (48a, 48b) of the parabola has a width 2a' which defines the input diameter of the parabola, the lighting system being **characterised in that** the injection and collimation zone (32) includes two rectilinear slots (42a, 42b) arranged on either side of the axis of symmetry (X-X) of the parabola, the two slots (42a, 42b) moving away from each other in the direction of the light extraction zone (36).

2. Lighting system according to claim 1, **characterized in that** the slots (42a, 42b) form an angle of 3° with the axis of symmetry (X-X) of the parabola.

3. Lighting system according to any of claims 1 or 2, **characterized in that** a transmission zone (34) including at least a first plane portion (50) of rectangular shape is inserted between the injection and collimation zone (32) and the extraction zone (36).

4. Lighting system according to claim 3, **characterized in that** the first plane portion (50) is extended by a second semi-cylindrical portion (52), which is in turn extended by the extraction zone (36) which extends parallel to the injection and collimation zone (32).

5. Lighting system according to claim 4, **characterized in that** the data display device is reflective.

6. Lighting system according to claim 5, **characterized**

**in that** the data display device is a liquid crystal cell (56), an electrophoretic or cholesteric display device, a micro-opto-electromechanical system, an electro-wetting display device, or a watch dial.

7. Lighting device according to any of claims 1 to 6, **characterized in that** the light source (38) is a pinpoint source.

8. Lighting system according to any of claims 1 to 7, **characterized in that** the light source (38) is a light emitting diode.

Fig. 1

Fig. 2A

Fig. 2B

Fig. 3

Fig. 4A

Fig. 4B

Fig. 5

Fig. 6A

Fig. 6B

**Fig. 6C**

**Fig. 7A**

DETECTOR IMAGE: INCOHERENT IRRADIANCE

WED DEC 5 2007
DETECTOR 7, NSCC SURFACE 1:
SIZE 6.000 W X 0.400 H MILLIMETERS, PIXELS 101 W X 101 H, TOTAL HITS = 159509
PEAK IRRADIANCE : 1.0393E+002 WATTS/CM^2
TOTAL POWER : 7.9987E-001 WATTS

**Fig. 7B**

INCOHERENT IRRADIANCE

WED DEC 5 2007
DETECTOR 7, NSCC SURFACE 1: ROW CENTER, Y = 0.000E+000
SIZE 6.000 H X 0.400 H MILLIMETERS, PIXELS 101 H X 101 H, TOTAL HITS = 159509
PEAK IRRADIANCE : 1.8393E+002 WATTS/CM^2
TOTAL POWER : 7.9987E-001 WATTS

PARALLLINJECTIONDISPLAY_INVENTOR.ZMX
CONFIGURATION 1 OF 1

Fig. 8A

Fig. 8B

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007014371 A
- US 20060139580 A
- US 20030147232 A